Europäisches Patentamt

(19) European Patent Office

Office européen des brevets

(11) Publication number: **0 208 549 B1**

# EUROPEAN PATENT SPECIFICATION

(45) Date of publication of patent specification: 23.01.91 Bulletin 91/04

(51) Int. Cl.$^5$: **G11B 5/72, G11B 11/10**

(21) Application number: **86305295.7**

(22) Date of filing: **09.07.86**

(54) **A magneto-optical medium.**

(30) Priority: **10.07.85 JP 151506/85**

(43) Date of publication of application: **14.01.87 Bulletin 87/03**

(45) Publication of the grant of the patent: **23.01.91 Bulletin 91/04**

(84) Designated Contracting States: **DE FR GB NL**

(56) References cited:
EP-A- 0 135 322
US-A- 4 469 758
**IBM TECHNICAL DISCLOSURE BULLETIN, vol. 21, no. 10, March 1979, page 4196, New York, US; C.A. BRUCE et al.: "Hard coating for magnetic surfaces"**

(73) Proprietor: **MITSUBISHI KASEI CORPORATION 5-2, Marunouchi 2-chome Chiyoda-ku Tokyo 100 (JP)**

(72) Inventor: **Yoshitomi, Toshihiko 4-7-1103 Wakabadai Asahi-ku Yokohama-shi Kanagawa-ken (JP)**
Inventor: **Kobayashi, Yoshimitsu 4-20-6 Nishiogi-Kita Suginami-ku Tokyo (JP)**
Inventor: **Sasaki, Jun 2-9-6 Naruse Machida-shi Tokyo (JP)**
Inventor: **Watanabe, Yukio 28-6 Umegaoka Midori-ku Yokohama-shi Kanagawa-ken (JP)**

(74) Representative: **Woods, Geoffrey Corlett et al J.A. KEMP & CO. 14 South Square Gray's Inn London WC1R 5EU (GB)**

## Description

The present invention relates to a magneto-optical medium suitable for magneto-optical recording.

Among optical memory elements, a magneto-optical recording system is highly practicable as an erasable type memory on which a recording may be formed or from which a recording may be erased.

The medium for a magneto-optical recording system is typically a thin alloy film comprising rare earth element(s) and transition metal(s). Such a film is excellent from the view point of all-around memory properties. However, the films are poor in terms of corrosion resistance.

This is a substantial disadvantage. Since thin alloy films comprising rare earth element(s) and transition metal(s) have a poor corrosion-resistance, with the progress of corrosion there occurs a reduction of the magnetic cohesive force which is necessary for high density recording, a reduction of the Kerr rotation angle which is necessary for a high S/N ratio and an increase of the error rate.

Hitherto, two methods have been adopted in order to improve the corrosion-resistance of the film :

(1) to include an additive agent in the magnetic layer, and

(2) to provide a protective layer.

In the method of using a protective layer for improving the corrosion-resistance, a protective layer of an oxide of high melting point such as $Al_2O_3$, was first proposed. These oxides are low in reactivity with respect to Tb, and Fe. They are low therefore in reactivity at the interface between a protective layer and a magnetic layer. In other words, the deterioration of the magnetic layer is low (Generally, oxygen emitted from the oxide often reacts with Tb, but, in the case where the oxide is $Al_2O_3$, such a reaction is substantially reduced since the bond between aluminium and oxygen is strong). Accordingly, a protective layer of an oxide of high melting point is preferable.

However, these oxides have a disadvantage. When a layer of such an oxide is formed on a plastics base plate, the layer tends to crack. In addition, these oxides are low in anti-moisture property. This results in smear-like spots being formed on the surface of a layer of an oxide when exposed to a damp atmosphere with a high humidity. The incidence of the read/write laser beam thereinto becomes difficult. Consequently, optical characteristics of the system are degraded.

Other protective layers which have been proposed include layers of nitrides such as AlN and $Si_3N_4$ and layers of fluorides such as $MgF_2$ or $CeF_3$. These compounds do not contain oxygen. Layers of them are therefore favourable from the point of view of protecting the magnetic layer. However, for these protective layers the following problems have been pointed out :

(1) nitride layers are high in thermal conductivity and the loss of heat is large at the time of laser irradiation of the recording medium,

(2) the adhesion between a nitride layer and a magnetic layer is weak, and

(3) for fluoride layers it is difficult to form a film structure dense enough to stop the penetration of oxygen and/or water.

Also, for magneto-optical media comprising a base plate such as glass, metal or plastics and a magnetic layer, in the case of using a plastics such as acrylic resin or polycarbonate resin, as the base plate, it has been pointed out that

(1) the affinity of the base plate to the magnetic layer is inferior, and as a result cracks are formed and/or exfoliation occurs, and

(2) the magnetic layer deteriorates due to the small amount of air and water which is contained in the base plate or which has penetrated through the base plate.

Accordingly, a protective layer is required in which

(1) the affinity of the protective layer with regard to the base plate or the magnetic layer is high,

(2) water and air do not penetrate, and

(3) the protective layer itself is not caused to deteriorate by water or air.

Further, in the case where a protective layer is placed between a base plate and a magnetic layer (the protective layer is placed on the surface of the magnetic layer, onto which an incident beam is irradiated), it is desirable that the transparency of the protective layer is sufficient to allow the incident beam to reach the magnetic layer and that the material of the protective layer has a high refractive index in order to improve the sensitivity of the magneto-optical medium when it is read.

It has now been found that a protective layer comprising a complex oxide containing an oxide of aluminium overcomes the problems discussed above. It is now possible to provide a protective layer which does not react with a magnetic layer at the interface therebetween, which has an excellent affinity to a plastics base plate such as one composed of acrylic resin or polycarbonate resin, which has a low heat-conductivity and a high refractive index, which is not deteriorated by water and air and which is formed at high productivity.

US-A-4,469,758 discloses a magnetic recondignedium which has firely devided aluminuim titanite included in a surface coating to provide reduced mechanical wear of the medium and a cleaning action on the magnetic recording and/or reading heads.

IBM Thechnical Disclosure Bulletin vol. 21, No. 10, p. 4196 discloses that a thin hard protective coating of silica or silica-alumina can be deposited onto magnetic surfaces. To ensure better wear characteristics a layer of colloidal alumina may be deposited first.

The present invention provides a magneto-optical medium comprising a magnetic layer a protective layer and a base plate, characterised in that the protective layer is a layer of a complex oxide containing an oxide of aluminium.

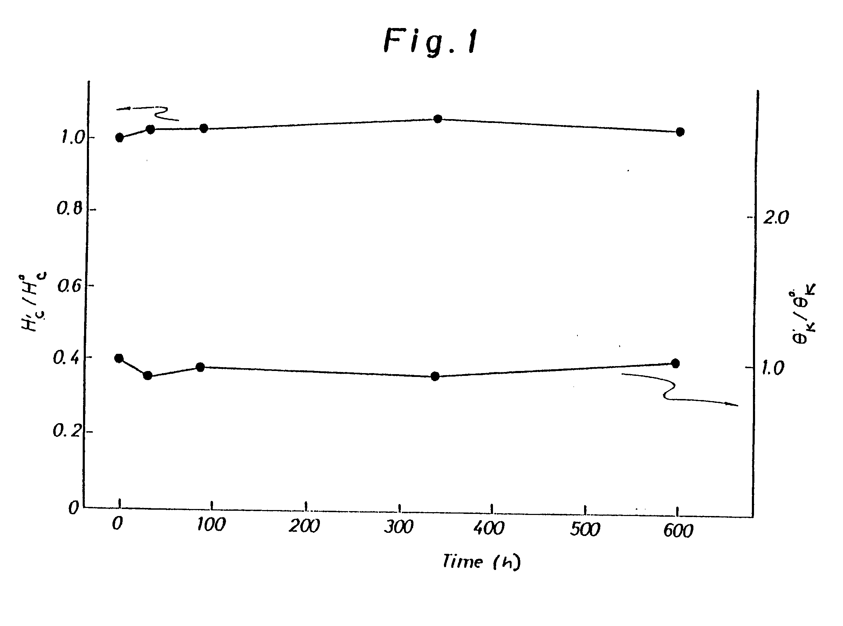

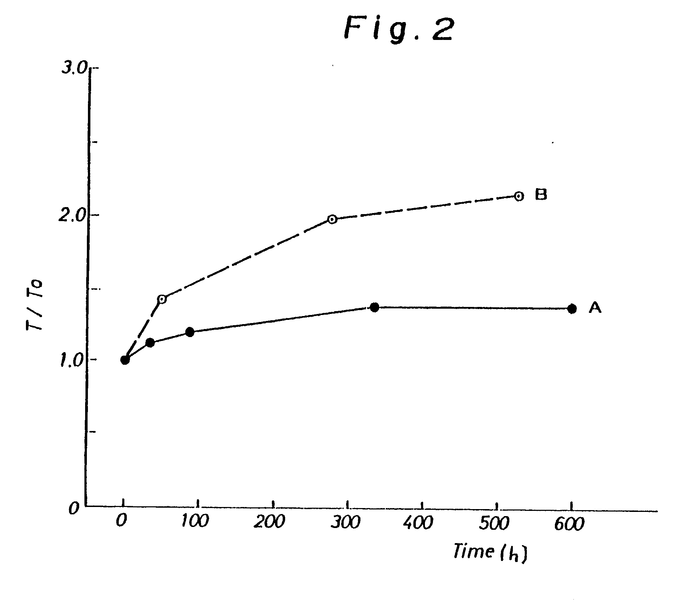

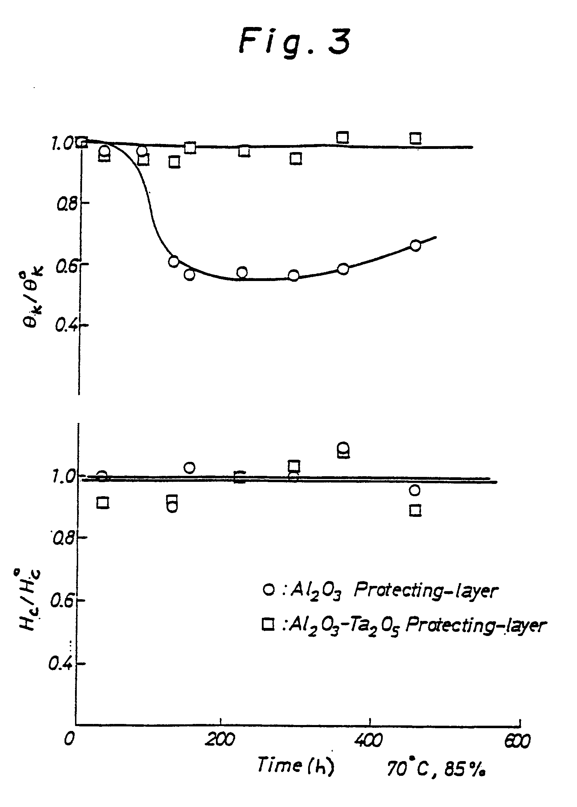

In the attached drawings, Figs. 1 and 3 show the changes of $H_c/H_c^\circ$ and $\ominus_k/\ominus_k^\circ$ over time of the media obtained in Examples 1 and 2 respectively, wherein $H_c^\circ$ and $\ominus_k^\circ$ represent, respectively, the cohesive force ($H_c$) and Kerr rotation angle ($\ominus_k$) at the beginning time, and Fig. 2 shows the laser beam transmissivity of specimen A and specimen B.

Examples of the base plate are glass, plastic such as acrylic resin, polycarbonate resin or a metal such as aluminium.

When an acrylic resin or polycarbonate resin is used as the base plate, the effect of the protective layer is remarkable.

The thickness of the base plate is generally from 1 mm to 2 mm.

As the magnetic layer deposited on the base plate, an amorphous magnetic alloy layer of rare earth element(s) and a transition metal(s), for instance, TbFe, TbFeCo or TbCo, or a layer of a polycrystalline vertically-magnetized substance such as MnBi or MnCuBi is generally used. When using the amorphous magnetic alloy layer of the rare earth element(s), the effect thereof is remarkable. The thickness of the magnetic layer is generally from 5 to 300 nm (50 to 3000 Å).

The protective layer is disposed between the base plate and the magnetic layer, or the magnetic layer is disposed between the base layer and the protective layer.

As the complex oxide, a mixture and/or a solid solution of the oxides of aluminium and an oxide selected from metal oxides of the 5A Group of the Periodic Table according to IUPAC, such as oxides of tantalum or oxides of niobium ; metal oxides of the 4A and 4B Groups of the Periodic Table according to IUPAC such as oxides of silicom, oxides of titanium or oxides of zirconium ; metal oxides of the 6A Group of the Periodic Table according to IUPAC such as oxides of tungstem or oxides of molybdenum ; and oxides of rare earth elements such as oxides of ytterbium, oxides of yttrium or oxides of cesium, may be mentioned.

The mixing ratio of the above-mentioned oxide to the oxide of aluminium depends on the kind of oxide. The mixture may contain (1) the metal oxides of the 5A Group such as oxides of tantalum or oxides of niobium in an amount of from 3 to 80 mol%, preferably from 10 to 50 mol%, (2) the metal oxides of the 4A Group such as oxides of zirconium or oxides of titanium in an amount of from 20 to 95 mol%, preferably from 30 to 70 mol%, (3) the metal oxides of the 4B Group such as oxides of silicon in an amount of from 5 to 60 mol%, preferably from 10 to 50 mol%, (4) the metal oxides of the 6A Group such as oxides of tungsten or oxides of molybdenum in an amount of from 5 to 80 mol%, preferably from 10 to 60 mol% or (5) the oxides of a rare earth elements such as oxides of ytterbium, oxides of yttrium or oxides of cerium in an amount of from 5 to 80 mol%, preferably from 10 to 60 mol%.

Furthermore, the complex oxide may contain two or more kinds of oxides other than the oxides of aluminium.

To prepare the complex oxide, known methods such as ordinary physical vapour deposition (PVD), chemical vapour deposition (CVD) such as plasma CVD, coating using a liquid phase such as an alkoxide, or spin-coating, which are described as follows, can be used.

(1) The protective layer can be deposited by electron beam deposition or by sputtering using a sintered target source of the complex oxide.

(2) Targets of the oxides of aluminium and other oxides can be used separately for co-sputtering or a target composed of the oxides of aluminium and chips of other oxides can be used. (3) A metal target which reactive ion-plating or reactive sputtering, or a sub-oxides target, may be used.

The thickness of the protective layer is generally from 10 to 5000 Å (1 to 500 nm) preferably from 10 to 200 nm (100 to 2000 Å).

When the composite oxide is rapidly deposited on the base plate, the affinity of the protective layer and the base plate is lowered. On the other hand, in the case of slower deposition, the productivity of the magneto-optical medium according to the present invention is lowered. Accordingly, a suitable deposition rate is from 0.01 to 10 nm/s (0.1 to 100 Å/s), preferably 0.1 to 1 nm/s (1 to 10 Å/s).

Usually magneto-optical memory media comprise a disk base plate and a magnetic layer. The read/write laser beam is usually shone through the transparent base plate. The protective layer used in the present invention is disposed (sandwiched) between the base plate and the magnetic layer in order to avoid penetration of oxygen and/or water which causes degradation (oxidation) of the magnetic layer.

When using glass as the base plate, since oxygen and/or water almost never penetrate through the base plate, the magnetic layer may be disposed (sandwiched) between the protective layer and the base layer.

When using plastic such as acrylic resin or polycarbonate resin as the base plate, since oxygen and/or water would penetrate through the base plate, the protective layer is disposed (sandwiched) between the magnetic layer and the base layer.

When depositing the protective layer, magnetic layer and another protective layer on the base plate, another protective layer other than the protective layer of the complex oxide may be used, for example a layer of a nitride such as NB, $Si_3N_4$, TiN, ZrN, NbN or TaN, a carbide such as TiC, NbC, TaC or SiC or a silicide such as $TaSi_2$, $CrSi_2$, $CoSi_2$, $VSi_2$ or $TiSi_2$.

The protective layer of the complex oxide can be used as another protective layer.

Examples of the structure of the magneto-optical medium according to the present invention are :

(1) magnetic layer/protective layer/base plate, (2) protective layer/magnetic layer/base plate, (3) protective layer/magnetic layer/protective layer/base plate, (4) another protective layer/ magnetic layer/protective layer/base plate and (5) protective layer/magnetic layer/another protective layer/ base plate.

The magneto-optical medium having the above-mentioned composition may be used for other uses a part from a magneto-optical memory which utilize the magneto-optical effect, for instance optical-isolators.

The generation of cracks at the time of preparing the film is the magneto-optical medium under high humidity is prevented and accordingly the magneto-optical medium of the present invention has favorable properties.

The present invention will now be explained in more detail in the following non-limitative Examples :

EXAMPLE 1 :

1) Preparation of a target

After weighing raw material powder ($Al_2O_3$ and $Ta_2O_5$ of greater than 99.9% purity), the raw material was dispersed in ethanol. After mixing the ethanolic dispersion by ball-milling, the material was dried at a temperature of from 60 to 70°C, molded by a press under a pressure of $2 \times 10^7$ Pa (200 Kg/cm²) and then sintered for 10 hours in air at 1000°C to obtain a target.

2) Formation of a layer

On a base plate, a 100 nm (1000 Å) thick protective layer, a 50 nm (500 Å) thick magnetic layer of Tb or TbFe and a 100 nm (1000 Å) thick protective layer were vapour-deposited by an electron beam in that order, the background pressures during vapour coating being $1.3 \times 10^{-3}$ Pa ($9.9 \times 10^{-6}$ Torr) for the protective layer, and $1.3 \times 10^{-4}$ Pa ($9.9 \times 10^{-6}$ Torr) for the magnetic layer, and the vapour deposition rates being 0.5 nm/s (5 Å/s) for the protective layer and 1 nm/s (10 Å/s) for the magnetic layer.

The composition ratio of TbFe (Tb :Fe) was 3 :7 by volume in the layer.

3) Evaluation

The media were examined by optical microscopy and X-ray diffraction analysis and the light transmissivity at 800 nm of the media just after preparation was measured.

The deterioration over time of the media was traced while keeping the media in a thermostat at 70°C and 80% RH.

It is considered that the lower the transmissivity, the less the deterioration.

In addition, the Tb layer per se is not magnetic, but terbium is one of the components of the magnetic layer. Since terbium deteriorates rapidly, the transmissivity of the medium changes remarkably due to the formation of oxides of terbium.

Accordingly, by determination of the deterioration of the Tb layer over time, the effect of the protective layer is observed. Therefore, as a reference example, a medium produced by depositing the composite oxide on the Tb layer is used.

The transmissivity of the medium comprising a Tb layer and the protective layer immediately after the medium is produced is defined as a unit, the deterioration degree thereof is measured by measuring the transmissivity of the medium after the accelerating deterioration test.

In the protective layer of the $Al_2O_3$–$Ta_2O_5$ series, the target compositions were $Al_2O_3$, $Al_2O3$–$Ta_2O_5$(20 :1), $Al_2O_3$–$Ta_2O_5$(5 :1), $Al_2O_3$–$Ta_2O_5$(1 :2) or $Ta_2O_5$. Each protective layer deposited on Tb layer or TbFe layer on a polycarbonate (PC) base plate (thickness :1.2 μm) was kept for 1000 hours in a thermostat at 70°C and 85% RH, and the results are shown in Table 1.

4

The value T/To is the ratio of the transmissivity of the medium just after the preparation thereof to the transmissivity of the same medium after 1000 hours in a thermostat at 70°C and 85% RH.

Since the Tb layer is crystalline, the formation of oxide(s) of Tb due to deterioration can also be evaluated by X ray diffraction analysis.

By keeping the degree of vacuum and the thickness of the vapour-deposited membrane at the time of preparing the layer constant, it is possible to prepare a layer with good reproducibility, and accordingly the data for Tb are shown in Table 1 in addition to the data for TbFe.

## Table 1

| Protective layer | Tb | | | TbFe | | |
|---|---|---|---|---|---|---|
| | T/To | X-ray diff-raction | Cracks | T/To | Cracks | Spots |
| $Al_2O_3$ | 1.95 | $Tb+Tb_4O_7$ | many | 1.11 | many | many[*1)] |
| $Al_2O_3-Ta_2O_5$ (20:1) | 2.2 | | few | 2.3 | few | few[*2)] |
| $Al_2O_3-Ta_2O_5$ (5:1) | 1.04 | Tb | very few | 1.10 | very few | none |
| $Al_2O_3-Ta_2O_5$ (1:2) | 2.0 | | few | 1.11 | very few | none |
| $Ta_2O_5$ | 1.79 | $TbO_{1.81}$ | many | 1.28 | very few | none |

1) Spots were observed after 50 h

2) Spots were observed after 150 h

Specimen A was prepared by laminating 1) a 110 nm (1100 Å) thick layer of $Al_2O_3-Ta_2O_5$(5 : 1) at a rate of 0.3 nm/s (3 Å/s) 2) a 50 nm (500 Å) thick layer of TbFe at a rate of 0.5 nm/s (5 Å/s) and 3) a 110 nm (1100 Å) thick layer of $Al_2O_3-Ta_2O_5$(5 : 1) at a rate of 0.3 nm/s (3 Å/s) on a PC base plate.

In the above-mentioned preparation, the generation of cracks and smear-like spots were not observed after keeping the specimen A for 3000 hours in a thermostat at 70°C and 85% RH.

The change of the Kerr rotation angle ($\theta_k$) and the cohesive force ($H_c$) during keeping at 70°C and 85% RH is shown in Fig. 1.

At the same time, the other specimen B having a structure of $Ta_2O_5-SiO_2$(1 : 1)/TbFe/$Ta_2O_5-SiO_2$(1 : 1)/PC base Plate was prepared and kept in the thermostat at 70°C and 85% RH. However, specimen B did not show Kerr hysteresis within 100 hours (not shown in Figs.).

The change of light transmissivity of specimens A and B which did not show the Kerr hysteresis is shown in Fig. 2, and the respective light transmissivity in the early stage (To, in %) is shown below.

## Table 2

| Name of specimen | To (%) |
|---|---|
| A | 6 |
| B (Comparative) | 5.4 |

As seen in the Table 2, the deterioration in the early stage can be evaluated.

### EXAMPLE 2 :

A 100 nm (1000 Å) thick layer of TbFe amorphous alloy was formed by sputtering on a glass base plate and then a 30 to 50 nm (300 to 500 Å) thick film of a complex oxide ($Al_2O_3$–$Ta_2O_5$) was formed also by sputtering on the thus formed layer.

The layer of a complex oxide ($Al_2O_3$–$Ta_2O_5$) was prepared by using a target of a predetermined amount of thin pellets (9 mm diameter and 1 mm thick) of $Ta_2O_5$ on a $Al_2O_3$ target (10.16 cm in diameter) and applying 150 W DC power under a pressure of 1.3 Pa ($1 \times 10^{-2}$ Torr) of pure gaseous argon.

The medium was kept in a thermostat at 70°C and 85% RH, and was taken out regularly to measure the cohesive force ($H_c$) and the Kerr rotation angle ($\theta_k$) to determine the change of these values over time, the results being shown in Fig. 3, wherein the regular square (□), and the circle (○) show the results obtained for the $Al_2O_3$–$Ta_2O_5$ protective layer and the $Al_2O_3$ protective layer respectively.

As seen in Fig. 3, although the $Al_2O_3$ protective layer protected TbFe to the same extent as the $Al_2O_3$–$Ta_2O_5$ protective layer and showed a stabilized protective ability, the Kerr rotation angle ($\theta_k$) showed a reduction of not less than 40% after keeping the medium for 100 hours at 70°C and 85% RH. On examining the medium protected by the $Al_2O_3$ protective layer after 100 hours at 70°C and 85% RH by a reflecting optical microscope, it was found that smear-like spots of 50 to 100 μm diameter were generated on the surface. On the other hand, on examining the medium protected by the $Al_2O_3$–$Ta_2O_5$ protective layer, it was found that the medium showed no change after more than 400 hours of the above-mentioned accelerating test.

### EXAMPLE 3 :

In the same manner as in Example 1 except for using the protective layers shown in Table 3, four kinds of media were prepared and subjected to the same tests as in Example 1, the results (after keeping each medium for 1000 h at 70°C and 85% RH) being shown in Table 3.

Table 3

| Protective layer | Tb | | TbFe | | |
|---|---|---|---|---|---|
| | Initial Trans-missivity To (%) | Cracks | Initial Trans-missivity To (%) | Cracks | Spots |
| $Al_2O_3$ | 4 | many | 7 | many | many |
| $Al_2O_3$-$SiO_2$ (20:1) | 8 | few | 6 | few | few |
| $Al_2O_3$-$SiO_2$ (3:2) | 8 | none | 10 | none | few |
| $SiO_2$ | 25 | none | 14 | none | none |

EXAMPLE 4 :

In the same manner as in Example 1 except for using the protective layer shown in Table 4, three kinds of media were prepared and subjected to the same tests as in Example 1, the results (after keeping each medium for 1000 h at 70°C and 85% RH) being shown in Table 4.

Table 4

| Protective layer | Tb | | TbFe | | |
|---|---|---|---|---|---|
| | Initial Trans-missivity To (%) | Cracks | Initial Trans-missivity To (%) | Cracks | Spots |
| $Al_2O_3$ | 4 | many | 7 | many | many |
| $Al_2O_3$-$TiO_2$ (2:1) | 38 | few | 10 | few | none |
| $Al_2O_3$-$TiO_2$ (1:2) | 17 | very few | 5 | very few | none |

EXAMPLE 5 :

In the same manner as in Example 1 except for using the protective layers shown in Table 5, 8 kinds of media were prepared and subjected to the same tests as in Example 1, the results (after keeping each medium for 1000 h at 70°C and 85% RH) being also shown in Table 5. However, T/To is a value after keeping each medium for 2000 h at 70°C and 85% RH. In Table 5, the trend of the oxidation of the Tb layer is shown as the "Existence of Oxide". The existence of the oxidation of Tb indicates the grades of the protectivity of the protective layer.

7

Table 5

| Protective layer | Initial Transmissivity To (%) | Tb | | | TbFe | | | Evaluation | |
| --- | --- | --- | --- | --- | --- | --- | --- | --- | --- |
| | | T/To (%) | Existence of Oxide (X-ray diffraction) A*1) → B*2) | Cracks | Initial Transmissivity To (%) | Cracks | Spots | Reactivity | Stability & Adhesion |
| $Al_2O_3$ | 4 | 2.0 | none → few | many | 7 | many | many | O | x |
| $Al_2O_3$-$Ta_2O_5$ (5:1) | 4 | 1.2 | none → none | very few | 5 | few | none | ⊙ | O |
| $Al_2O_3$-$WO_3$ (5:1) | 11 | 1.4 | none → very few | few | 6 | many | none | O | O |
| $Al_2O_3$-$Nb_2O_3$ (5:1) | 10 | 1.7 | none → few | few | 6 | none | very few | O | O |
| $Al_2O_3$-$ZrO_2$ (5:1) | 20 | 0.84 | none → very few | few | 9 | few | very few | Δ - O | O |
| $Al_2O_3$-$TiO_2$ (1:2) | 17 | 2.0 | very few → few | few | 5 | many | none | Δ | O |
| $Al_2O_3$-$SiO_2$ (20:1) | 8 | 1.8 | none → few | many | 6 | few | few | Δ | Δ |
| $SiO_2$ | 25 | 2.7-3.2 | many → many (mainly oxide) | many | 14 | none | none | x | O |

1) : (A) is a result immediately after producing the medium.
2) : (B) is a result after keeping the medium for 1000 h at 70°C and 85% RH.

EXAMPLE 6 :

In the same manner as in Example 2 except for using polycarbonate base plate (thickness : 1.2 mm) and sputtering apparatus (TOKUDA Manufacturing Co., Ltd., CFS-8EP), the magneto-optical medium (DISK) comprising a base plate/protective layer/magnetic layer/protective layer was produced, the protective layer being $Al_2O_3$-$Ta_2O_5$(5 : 1) of thickness 70 nm (700 Å) and the magnetic layer being Tb-Fe-Co (24: 68 : 8) of thickness 90 nm (900 Å).

The magneto-optical medium was kept in a thermostat at 65°C and 80% RH and the deterioration over of time was measured by a Read/Write evaluation machine (manufactured by Nakamichi Co., Ltd.).

The change of record/play back characteristics (ratio of C/N) was evaluated under the conditions of carrier frequency 0.5 MHz, writing laser power 3.3 mW, disc peripheral spee 2 m/s and reading laser power 0.8 mW. Immediately after producing the disc, the C/N ratio was 40 dB and after 200 h, 900 h, 1200 h and 2400 h, each C/N ratio was measured. No change of C/N ratio was observed.

## Claims

1. A magneto-optical medium comprising a magnetic layer on which information can be recorded or from which information can be read using a laser beam, a protective layer and a base plate, characterised in that the protective layer is a layer of a complex oxide containing an oxide of aluminium.

2. A magneto-optical medium according to claim 1, wherein said complex oxide is a mixture and/or solid solution of an oxide of aluminium and at least one oxide selected from metal oxides of groups 4A, 4B, 5A and 6A of the Periodic Table according to IUPAC and oxides of a rare earth element.

3. A magneto-optical medium according to claim 2, wherein said complex oxide comprises an oxide of aluminium and at least one oxide selected from oxides of tantalum, tungsten, niobium, zirconium, silicon and titanium.

4. A magneto-optical medium according to claim 3, wherein said complex oxide comprises an oxide of aluminium and at least one oxide selected from oxides of tantalum, tungsten and niobium.

5. A magneto-optical medium according to claim 4, wherein said complex oxide comprises an oxide of aluminium and an oxide of tantalum.

6. A magneto-optical medium according to claim 2 or 3, wherein said complex oxide comprises an oxide of aluminium and from 20 to 95 mol% of a metal oxide of group 4A Group of the Periodic Table according to IUPAC.

7. A magneto-optical medium according to claim 2 or 3, wherein said complex oxide comprises an oxide of aluminium and from 5 to 60 mol% of a metal oxide of 4B Group of Periodic Table according to IUPAC.

8. A magneto-optical medium according to any one of claims 2 to 5, wherein said complex oxide comprises an oxide of aluminium and from 3 to 80 mol% of a metal oxide of 5A Group of Periodic Table according to IUPAC.

9. A magneto-optical medium according to any one of claims 2 to 4, wherein said complex oxide comprises an oxide of aluminium and from 5 to 80 mol% of a metal oxide of 6A Group of Periodic Table according to IUPAC.

10. A magneto-optical medium according to claim 2, wherein said complex oxide comprises an oxide of aluminium and from 5 to 80 mol% of an oxide of a rare earth element.

11. A magneto-optical medium according to any one of the preceding claims, wherein the thickness of a said protective layer is 1 to 500 nm (10 to 5000 Å).

12. A magneto-optical medium according to any one of the preceding claims, wherein a said protective layer is disposed between the magnetic layer and the base plate.

13. A magneto-optical medium according to any one of the preceding claims, wherein said magnetic layer is disposed between a said protective layer and the base plate.

14. A magneto-optical medium according to claim 13, wherein a further said protective layer is disposed between the base layer and the magnetic layer.

## Ansprüche

1. Magneto-optisches Medium, welches eine magnetische Schicht umfaßt, auf welche Information aufgezeichnet oder von welcher Information gelesen werden kann, wobei ein Laserstrahl verwendet wird, ferner eine Schutzschicht und eine Grundplatte umfaßt, dadurch **gekennzeichnet**, daß die Schutzschicht eine Schicht aus einem komplexen Oxid ist, welches ein Oxid von Aluminium enthält.

2. Magneto-optisches Medium nach Anspruch 1, dadurch **gekennzeichnet,** daß das komplexe Oxid eine Mischung und/oder feste Lösung eines Oxids von Aluminium und wenigstens einem Oxid, welches aus Metalloxiden der Gruppen 4A, 4B, 5A und 6A der Periodentafel gemäß IUPAC gewählt ist, und Oxiden eines Elements der seltenen Erden ist.

3. Magneto-optisches Medium nach Anspruch 2, dadurch **gekennzeichnet,** daß das komplexe Oxid ein Oxid von Aluminium und wenigstens ein Oxid umfaßt, welches aus Oxiden von Tantal, Wolfram, Niobium, Zirkonium, Silizium und Titan gewählt ist.

4. Magento-optisches Medium nach Anspruch 3, dadurch **gekennzeichnet,** daß das komplexe Oxid ein Oxid von Aluminium und wenigstens ein Oxid umfaßt, welches aus Oxiden von Tantal, Wolfram und Niobium gewählt ist.

5. Magneto-optisches Medium nach Anspruch 4, dadurch **gekennzeichnet,** daß das komplexe Oxid ein Oxid von Aluminium und ein Oxid von Tantal umfaßt.

6. Magneto-optisches Medium nach Anspruch 2 oder 3, dadurch **gekennzeichnet,** daß das komplexe Oxid ein Oxid von Aluminium und 20 bis 95 Mol-% eines Metalloxides der Gruppe 4A der Periodentafel gemäß IUPAC umfaßt.

7. Magneto-optisches Medium nach Anspruch 2 oder 3, dadurch **gekennzeichnet,** daß das komplexe Oxid ein Oxid von Aluminium und 5 bis 60 Mol-% eines Metalloxides der Gruppe 4B der Periodentafel gemäß IUPAC umfaßt.

8. Magneto-optisches Medium nach einem der Ansprüche 2 bis 5, dadurch **gekennzeichnet,** daß das komplexe Oxid ein Oxid von Aluminium und 3 bis 80 Mol-% eines Metalloxides der Gruppe 5A der Periodentafel gemäß IUPAC umfaßt.

9. Magneto-optisches Medium nach einem der Ansprüche 2 bis 4, dadurch **gekennzeichnet,** daß das komplexe Oxid ein Oxid von Aluminium und 5 bis 80 Mol-% eines Metalloxides der Gruppe 6A der Periodentafel gemäß IUPAC umfaßt.

10. Magneto-optisches Medium nach Anspruch 2, dadurch **gekennzeichnet,** daß das komplexe Oxid ein Oxid von Aluminium und 5 bis 80 Mol-% eines Oxides eines Elementes der seltenen Erden umfaßt.

11. Magneto-optisches Medium nach einem der vorangehenden Ansprüche, dadurch **gekennzeichnet,** daß die Dicke der Schutzschicht 1 bis 500 nm (10 bis 5000 Å) beträgt.

12. Magneto-optisches Medium nach einem der vorangehenden Ansprüche, dadurch **gekennzeichnet,** daß die Schutzschicht zwischen der magnetischen Schicht und der Grundplatte angeordnet ist.

13. Magneto-optisches Medium nach einem der vorangehenden Ansprüche, dadurch **gekennzeichnet,** daß die magnetische Schicht zwischen der Schutzschicht und der Grundplatte angeordnet ist.

14. Magneto-optisches Medium nach Anspruch 13, dadurch **gekennzeichnet,** daß eine weitere Schutzschicht zwischen der Grundplatte und der magnetischen Schicht angeordnet ist.


## Revendications

1. Milieu magnéto-optique comprenant une couche magnétique, sur laquelle une information peut être enregistrée ou à partir de laquelle une information peut être lue en utilisant un faisceau laser, une couche protectrice et une plaque de base, caractérisé en ce que la couche protectrice est une couche formée d'un oxyde complexe contenant un oxyde d'aluminium.

2. Milieu magnéto-optique selon la revendication 1, dans lequel ledit oxyde complexe est un mélange et/ou une solution solide d'un oxyde d'aluminium et d'au moins un oxyde choisi parmi les oxydes métalliques des groupes 4A, 4B, 5A et 6A du tableau périodique conformément à IUPAC et des oxydes d'un élément des terres rares.

3. Milieu magnéto-optique selon la revendication 2, dans lequel ledit oxyde complexe comprend un oxyde d'aluminium et au moins un oxyde choisi parmi les oxydes de tantale, de tungstène, de niobium, de zirconium, de silicium et de titane.

4. Milieu magnéto-optique selon la revendication 3, dans lequel ledit oxyde complexe comprend un oxyde d'aluminium et au moins un oxyde choisi parmi les oxydes de tantale, de tungstène et de niobium.

5. Milieu magnéto-optique suivant la revendication 4, dans lequel ledit oxyde comprend un oxyde d'aluminium et un oxyde de tantale.

6. Milieu magnéto-optique selon la revendication 2 ou 3, dans lequel ledit oxyde complexe comprend un oxyde d'aluminium et entre 20 et 95% en moles d'un oxyde métallique du groupe 4A du tableau périodique selon IUPAC.

7. Milieu magnéto-optique selon la revendication 2 ou 3, dans lequel ledit oxyde complexe comprend un oxyde d'aluminium et entre 5 et 60% en moles d'un oxyde métallique du groupe 4B du tableau périodique selon IUPAC.

8. Milieu magnéto-optique selon l'une quelconque des revendications 2 à 5, dans lequel ledit oxyde complexe comprend un oxyde d'aluminium et entre 3 et 80% en moles d'un oxyde métallique du groupe 5A du tableau périodique selon IUPAC.

9. Milieu magnéto-optique selon l'une quelconque des revendications 2 à 4, dans lequel ledit oxyde complexe comprend un oxyde d'aluminium et entre 5 et 80% en poids d'un oxyde métallique du groupe 6A du tableau périodique selon IUPAC.

10. Milieu magnéto-optique selon la revendication 2, dans lequel ledit oxyde complexe comprend un oxyde d'aluminium et entre 5 et 80% en poids d'un oxyde d'un élément des terres rares.

11. Milieu magnéto-optique selon l'une quelconque des revendications précédentes, dans lequel l'épaisseur de ladite couche protectrice est comprise entre 1 et 500 nm (10 et 5000 Å).

12. Milieu magnéto-optique selon l'une quelconque des revendications précédentes, dans lequel ladite couche protectrice est disposée entre la couche magnétique et la plaque de base.

13. Milieu magnéto-optique selon l'une quelconque des revendications précédentes, dans lequel ladite couche magnétique est disposée entre ladite couche protectrice et la plaque de base.

14. Milieu magnéto-optique selon la revendication 13, dans lequel une autre couche protectrice est disposée entre la couche de base et la couche magnétique.

Fig. 1

EP 0 208 549 B1

Fig. 2

EP 0 208 549 B1

# Fig. 3

$\bigcirc$ : $Al_2O_3$ Protecting-layer

$\square$ : $Al_2O_3\text{-}Ta_2O_5$ Protecting-layer

Time (h)    70°C, 85%